# EUROPEAN PATENT APPLICATION

(11) **EP 4 797 587 A1**
(43) Date of publication of application: **26.08.2026**
(21) Application number: 24896020.5
(22) Date of filing: 10.10.2024
(51) Int. Cl.: H04L 1/00

(54) **RATE SWITCHING METHOD FOR USE IN OPTICAL COMMUNICATION, AND RELATED DEVICES**

(30) Priority: 30.11.2023 CN 202311633431
(71) Applicant: HUAWEI TECHNOLOGIES CO., LTD., Shenzhen, Guangdong 518129 (CN)
(72) Inventor: CHANG, Deyuan, Shenzhen, Guangdong 518129 (CN); SOWAILEM, Mohammed, Shenzhen, Guangdong 518129 (CN); LUO, Jiating, Shenzhen, Guangdong 518129 (CN); WANG, Jin, Shenzhen, Guangdong 518129 (CN); LI, Chuandong, Shenzhen, Guangdong 518129 (CN)
(74) Representative: Maiwald GmbH
(86) International application number: PCT/CN2024/123854
(87) International publication number: WO 2025/112926

(57) **Abstract**

Embodiments of this application disclose a rate switching method applied to optical communication and a related apparatus. If channel quality changes greatly or a client requirement changes, a transmitting apparatus and a receiving apparatus may obtain a configuration parameter corresponding to a new rate mode. Before sending data based on the configuration parameter corresponding to the new rate mode, the transmitting apparatus first sends, to the receiving apparatus through a data lane, a rate switching identifier indicating rate switching, so that the receiving apparatus performs data processing based on the new rate mode, and both the transmitter and the receiver can complete rate switching to adapt to an actual scenario requirement. This helps implement high-performance and low-power transmission. In addition, the rate switching identifier is sent together with the data through the data lane, so that preparation for rate switching can be implemented more quickly. This helps reduce a rate switching delay and does not affect normal transmission of a service.

## Description

This application claims priority to Chinese Patent Application No. 202311633431.7, filed with the China National Intellectual Property Administration on November 30, 2023 and entitled "RATE SWITCHING METHOD APPLIED TO OPTICAL COMMUNICATION AND RELATED APPARATUS", which is incorporated herein by reference in its entirety.

### TECHNICAL FIELD

This application relates to the field of optical communication, and in particular, to a rate switching method applied to optical communication and a related apparatus.

### BACKGROUND

With the development of emerging network technologies such as 5G networks and artificial intelligence, high-speed and high-bandwidth transmission requirements also increase sharply. In the face of limited network resources, we need to perform refined network allocation to maximize spectrum utilization and a spectrum capacity. Conventional optical networks with standard fixed grids are gradually failing to meet diversified service requirements, and fixed data throughputs cause a waste of channel capacities.

Therefore, currently, an optical transmission solution in which a transmission rate can be flexibly switched based on an actual situation is urgently needed, and a high delay or interruption that may be caused by rate switching in an optical transmission process needs to be avoided.

### SUMMARY

Embodiments of this application provide a rate switching method applied to optical communication and a related apparatus, so that both a transmitter and a receiver can complete rate switching to adapt to an actual scenario requirement. This helps implement high-performance and low-power transmission. In addition, a rate switching identifier is sent together with data through a data lane, so that preparation for rate switching can be implemented more quickly. This helps reduce a rate switching delay and does not affect normal transmission of a service.

According to a first aspect, an embodiment of this application provides a rate switching method applied to optical communication, and the method is applied to a transmitting apparatus. First, the transmitting apparatus obtains a parameter corresponding to a first rate, where the parameter includes at least one of a modulation format, a probabilistic constellation shaping PCS parameter, and a transmission baud rate that correspond to the first rate. Then, the transmitting apparatus sends a rate switching identifier to a receiving apparatus through a data lane, where the rate switching identifier indicates that a data transmission rate is ready to be switched. Further, the transmitting apparatus sends first data to the receiving apparatus through the data lane based on the parameter corresponding to the first rate.

In this implementation, if channel quality changes greatly or a client requirement changes, the transmitting apparatus and the receiving apparatus may obtain a configuration parameter corresponding to a new rate mode. Before sending data based on the configuration parameter corresponding to the new rate mode, the transmitting apparatus first sends, to the receiving apparatus through the data lane, the rate switching identifier indicating rate switching, so that the receiving apparatus performs data processing based on the new rate mode, and both the transmitter and the receiver can complete rate switching to adapt to an actual scenario requirement. This helps implement high-performance and low-power transmission. In addition, the rate switching identifier is sent together with the data through the data lane, so that preparation for rate switching can be implemented more quickly. This helps reduce a rate switching delay and does not affect normal transmission of a service.

In some possible implementations, that the transmitting apparatus sends the first data to the receiving apparatus through the data lane based on the parameter corresponding to the first rate includes: The transmitting apparatus performs symbol mapping on to-be-sent data based on the modulation format corresponding to the first rate, to obtain the first data, and sends the first data; and/or the transmitting apparatus performs PCS processing on to-be-sent data based on the PCS parameter corresponding to the first rate, to obtain the first data, and sends the first data. Several specific operations for the transmitting apparatus to perform data processing on the to-be-sent data based on a new rate are provided herein, to send the data based on the new rate, so as to meet an actual requirement.

In some possible implementations, that the transmitting apparatus obtains the parameter corresponding to the first rate includes: The transmitting apparatus receives, through a control lane, an identifier of the first rate that is sent by the receiving apparatus, where the identifier of the first rate is sent under a condition that the receiving apparatus detects that a quality parameter change of the data lane is greater than a preset value. The transmitting apparatus determines, from a lookup table, the parameter corresponding to the identifier of the first rate, where the lookup table includes a correspondence between an identifier of a rate and a parameter. In this implementation, if the receiving apparatus detects that channel quality changes greatly, the receiving apparatus actively triggers a rate switching request. This helps meet an actual scenario requirement in real time, thereby implementing high-performance and low-power transmission.

In some possible implementations, after the transmitting apparatus receives, through the control lane, the identifier of the first rate that is sent by the receiving apparatus, and before the transmitting apparatus sends the rate switching identifier to the receiving apparatus through the data lane, the method further includes: The transmitting apparatus sends the identifier of the first rate to the receiving apparatus through the control lane, to feed back whether a correct identifier of the first rate is received. This helps improve handshake operation reliability.

In some possible implementations, after the transmitting apparatus sends the identifier of the first rate to the receiving apparatus through the control lane, and before the transmitting apparatus sends the rate switching identifier to the receiving apparatus through the data lane, the method further includes: The transmitting apparatus receives, through the control lane, a first response message sent by the receiving apparatus, where the first response message indicates the transmitting apparatus to send the rate switching identifier. This further improves a handshake operation procedure, and improves handshake operation reliability.

In some possible implementations, after the transmitting apparatus receives, through the control lane, the identifier of the first rate that is sent by the receiving apparatus, and before the transmitting apparatus sends the rate switching identifier to the receiving apparatus through the data lane, the method further includes: The transmitting apparatus receives, through the control lane, a first response message sent by the receiving apparatus, where the first response message indicates the transmitting apparatus to send the rate switching identifier. This extends an implementation of a handshake operation for rate switching.

In some possible implementations, that the transmitting apparatus receives, through the control lane, the identifier of the first rate that is sent by the receiving apparatus includes: The transmitting apparatus receives, through the control lane, the identifier of the first rate that is sent by the receiving apparatus and forwarded by a transit apparatus, to adapt to more application scenarios.

In some possible implementations, that the transmitting apparatus obtains the parameter corresponding to the first rate includes: The transmitting apparatus obtains an identifier of the first rate that corresponds to a client requirement. The transmitting apparatus determines, from a lookup table, the parameter corresponding to the identifier of the first rate, where the lookup table includes a correspondence between an identifier of a rate and a parameter. The method further includes: The transmitting apparatus sends the identifier of the first rate to the receiving apparatus through a control lane. In this implementation, if the client requirement changes, the transmitting apparatus actively triggers a rate switching request. This helps meet an actual scenario requirement in real time, thereby implementing high-performance and low-power transmission.

In some possible implementations, after the transmitting apparatus sends the identifier of the first rate to the receiving apparatus through the control lane, and before the transmitting apparatus sends the rate switching identifier to the receiving apparatus through the data lane, the method further includes: The transmitting apparatus receives, through the control lane, the identifier of the first rate that is sent by the receiving apparatus, to feed back whether a correct identifier of the first rate is received. This helps improve handshake operation reliability.

In some possible implementations, after the transmitting apparatus receives, through the control lane, the identifier of the first rate that is sent by the receiving apparatus, and before the transmitting apparatus sends the rate switching identifier to the receiving apparatus through the data lane, the method further includes: The transmitting apparatus sends a second response message to the receiving apparatus through the control lane, where the second response message indicates that the transmitting apparatus is ready to send the rate switching identifier, and send the first data. This further improves a handshake operation procedure, and improves handshake operation reliability.

In some possible implementations, after the transmitting apparatus sends the identifier of the first rate to the receiving apparatus through the control lane, and before the transmitting apparatus sends the rate switching identifier to the receiving apparatus through the data lane, the method further includes: The transmitting apparatus sends a second response message to the receiving apparatus through the control lane, where the second response message indicates that the transmitting apparatus is ready to send the rate switching identifier, and send the first data. This extends an implementation of a handshake operation for rate switching.

In some possible implementations, that the transmitting apparatus sends the identifier of the first rate to the receiving apparatus through the control lane includes: The transmitting apparatus sends the identifier of the first rate to a transit apparatus through the control lane, where the identifier of the first rate is forwarded by the transit apparatus to the receiving apparatus, to adapt to more application scenarios.

In some possible implementations, before the transmitting apparatus obtains the parameter corresponding to the first rate, the method further includes: The transmitting apparatus sends second data to the receiving apparatus through the data lane based on a parameter corresponding to a second rate.

According to a second aspect, an embodiment of this application provides a rate switching method applied to optical communication, and the method is applied to a receiving apparatus. First, the receiving apparatus obtains a parameter corresponding to a first rate, where the parameter includes at least one of a modulation format, a data decision threshold, and a system update step. Then, the receiving apparatus receives, through a data lane, a rate switching identifier sent by a transmitting apparatus, where the rate switching identifier indicates that a data transmission rate is ready to be switched. Further, the receiving apparatus receives, through the data lane, first data sent by the transmitting apparatus based on the first rate, and performs data processing on the first data based on the parameter corresponding to the first rate.

In this implementation, if channel quality changes greatly or a client requirement changes, the transmitting apparatus and the receiving apparatus may obtain a configuration parameter corresponding to a new rate mode. Before sending data based on the configuration parameter corresponding to the new rate mode, the transmitting apparatus first sends, to the receiving apparatus through the data lane, the rate switching identifier indicating rate switching, so that the receiving apparatus performs data processing based on the new rate mode, and both the transmitter and the receiver can complete rate switching to adapt to an actual scenario requirement. This helps implement high-performance and low-power transmission. In addition, the rate switching identifier is sent together with the data through the data lane, so that preparation for rate switching can be implemented more quickly. This helps reduce a rate switching delay and does not affect normal transmission of a service.

In some possible implementations, that the receiving apparatus performs data processing on the first data based on the parameter corresponding to the first rate includes: The receiving apparatus performs phase recovery on the first data based on the data decision threshold corresponding to the first rate; and/or the receiving apparatus performs polarization demultiplexing on the first data based on the system update step corresponding to the first rate; and/or the receiving apparatus performs symbol demapping on the first data based on the modulation format corresponding to the first rate. Several specific operations for the receiving apparatus to perform data processing on the received data based on a new rate are provided herein, to meet an actual requirement.

In some possible implementations, that the receiving apparatus obtains the parameter corresponding to the first rate includes: The receiving apparatus monitors a quality parameter of the data lane. If a quality parameter change of the data lane is greater than a preset value, the receiving apparatus determines an identifier of the first rate, and determines, from a lookup table, the parameter corresponding to the identifier of the first rate, where the lookup table includes a correspondence between an identifier of a rate and a parameter. The method further includes: The receiving apparatus sends the identifier of the first rate to the transmitting apparatus through a control lane.

In some possible implementations, after the receiving apparatus sends the identifier of the first rate to the transmitting apparatus through the control lane, and before the receiving apparatus receives, through the data lane, the rate switching identifier sent by the transmitting apparatus, the method further includes: The receiving apparatus receives, through the control lane, the identifier of the first rate that is sent by the transmitting apparatus.

In some possible implementations, after the receiving apparatus receives, through the control lane, the identifier of the first rate that is sent by the transmitting apparatus, and before the receiving apparatus receives, through the data lane, the rate switching identifier sent by the transmitting apparatus, the method further includes: The receiving apparatus sends a first response message to the transmitting apparatus through the control lane, where the first response message indicates the transmitting apparatus to send the rate switching identifier.

In some possible implementations, after the receiving apparatus sends the identifier of the first rate to the transmitting apparatus through the control lane, and before the receiving apparatus receives, through the data lane, the rate switching identifier sent by the transmitting apparatus, the method further includes: The receiving apparatus sends a first response message to the transmitting apparatus through the control lane, where the first response message indicates the transmitting apparatus to send the rate switching identifier.

In some possible implementations, that the receiving apparatus sends the identifier of the first rate to the transmitting apparatus through the control lane includes: The receiving apparatus sends the identifier of the first rate to a transit apparatus through the control lane, where the identifier of the first rate is forwarded by the transit apparatus to the transmitting apparatus.

In some possible implementations, that the receiving apparatus obtains the parameter corresponding to the first rate includes: The receiving apparatus receives, through a control lane, an identifier of the first rate that is sent by the transmitting apparatus based on a client requirement. The receiving apparatus determines, from a lookup table, the parameter corresponding to the identifier of the first rate, where the lookup table includes a correspondence between an identifier of a rate and a parameter.

In some possible implementations, after the receiving apparatus receives, through the control lane, the identifier of the first rate that is sent by the transmitting apparatus based on the client requirement, and before the receiving apparatus receives, through the data lane, the rate switching identifier sent by the transmitting apparatus, the method further includes: The receiving apparatus sends the identifier of the first rate to the transmitting apparatus through the control lane.

In some possible implementations, after the receiving apparatus sends the identifier of the first rate to the transmitting apparatus through the control lane, and before the receiving apparatus receives, through the data lane, the rate switching identifier sent by the transmitting apparatus, the method further includes: The receiving apparatus receives, through the control lane, a second response message sent by the transmitting apparatus, where the second response message indicates that the transmitting apparatus is ready to send the rate switching identifier.

In some possible implementations, after the receiving apparatus receives, through the control lane, the identifier of the first rate that is sent by the transmitting apparatus based on the client requirement, and before the receiving apparatus receives, through the data lane, the rate switching identifier sent by the transmitting apparatus, the method further includes: The receiving apparatus receives, through the control lane, a second response message sent by the transmitting apparatus, where the second response message indicates that the transmitting apparatus is ready to send the rate switching identifier.

In some possible implementations, that the receiving apparatus receives, through the control lane, the identifier of the first rate that is sent by the transmitting apparatus based on the client requirement includes: The receiving apparatus receives, through the control lane, the identifier of the first rate that is sent by the transmitting apparatus based on the client requirement and forwarded by a transit apparatus.

In some possible implementations, before the receiving apparatus obtains the parameter corresponding to the first rate, the method further includes: The receiving apparatus receives, through the data lane, second data sent by the transmitting apparatus based on a second rate.

According to a third aspect, an embodiment of this application provides a transmitting apparatus, and the transmitting apparatus includes an optical transmitting module and a transmitter controller. The transmitter controller is configured to obtain a parameter corresponding to a first rate, where the parameter includes at least one of a modulation format, a probabilistic constellation shaping PCS parameter, and a transmission baud rate that correspond to the first rate. The optical transmitting module is configured to: send a rate switching identifier to a receiving apparatus through a data lane, where the rate switching identifier indicates that a data transmission rate is ready to be switched; and send first data to the receiving apparatus through the data lane based on the parameter corresponding to the first rate.

In some possible implementations, the optical transmitting module is specifically configured to: perform symbol mapping on to-be-sent data based on the modulation format corresponding to the first rate, to obtain the first data, and send the first data; and/or perform PCS processing on to-be-sent data based on the PCS parameter corresponding to the first rate, to obtain the first data, and send the first data.

In some possible implementations, the transmitter controller is specifically configured to: receive, through a control lane, an identifier of the first rate that is sent by the receiving apparatus, where the identifier of the first rate is sent under a condition that the receiving apparatus detects that a quality parameter change of the data lane is greater than a preset value; and determine, from a lookup table, the parameter corresponding to the identifier of the first rate, where the lookup table includes a correspondence between an identifier of a rate and a parameter.

In some possible implementations, after the transmitter controller receives, through the control lane, the identifier of the first rate that is sent by the receiving apparatus, and before the optical transmitting module sends the rate switching identifier to the receiving apparatus through the data lane, the transmitter controller is further configured to send the identifier of the first rate to the receiving apparatus through the control lane.

In some possible implementations, after the transmitter controller sends the identifier of the first rate to the receiving apparatus through the control lane, and before the optical transmitting module sends the rate switching identifier to the receiving apparatus through the data lane, the transmitter controller is further configured to receive, through the control lane, a first response message sent by the receiving apparatus, where the first response message indicates the transmitting apparatus to send the rate switching identifier.

In some possible implementations, after the transmitter controller receives, through the control lane, the identifier of the first rate that is sent by the receiving apparatus, and before the optical transmitting module sends the rate switching identifier to the receiving apparatus through the data lane, the transmitter controller is further configured to receive, through the control lane, a first response message sent by the receiving apparatus, where the first response message indicates the transmitting apparatus to send the rate switching identifier.

In some possible implementations, the transmitter controller is specifically configured to receive, through the control lane, the identifier of the first rate that is sent by the receiving apparatus and forwarded by a transit apparatus.

In some possible implementations, the transmitter controller is specifically configured to: obtain an identifier of the first rate that corresponds to a client requirement; and determine, from a lookup table, the parameter corresponding to the identifier of the first rate, where the lookup table includes a correspondence between an identifier of a rate and a parameter. The transmitter controller is further configured to send the identifier of the first rate to the receiving apparatus through a control lane.

In some possible implementations, after the transmitter controller sends the identifier of the first rate to the receiving apparatus through the control lane, and before the optical transmitting module sends the rate switching identifier to the receiving apparatus through the data lane, the transmitter controller is further configured to receive, through the control lane, the identifier of the first rate that is sent by the receiving apparatus.

In some possible implementations, after the transmitter controller receives, through the control lane, the identifier of the first rate that is sent by the receiving apparatus, and before the optical transmitting module sends the rate switching identifier to the receiving apparatus through the data lane, the transmitter controller is further configured to send a second response message to the receiving apparatus through the control lane, where the second response message indicates that the transmitting apparatus is ready to send the rate switching identifier.

In some possible implementations, after the transmitter controller sends the identifier of the first rate to the receiving apparatus through the control lane, and before the optical transmitting module sends the rate switching identifier to the receiving apparatus through the data lane, the transmitter controller is further configured to send a second response message to the receiving apparatus through the control lane, where the second response message indicates that the transmitting apparatus is ready to send the rate switching identifier.

In some possible implementations, the transmitter controller is specifically configured to send the identifier of the first rate to a transit apparatus through the control lane, where the identifier of the first rate is forwarded by the transit apparatus to the receiving apparatus.

In some possible implementations, before the transmitter controller obtains the parameter corresponding to the first rate, the optical transmitting module is further configured to send second data to the receiving apparatus through the data lane based on a parameter corresponding to a second rate.

According to a fourth aspect, an embodiment of this application provides a receiving apparatus, and the receiving apparatus includes an optical receiving module and a receiver controller. The receiver controller is configured to obtain a parameter corresponding to a first rate, where the parameter includes at least one of a modulation format, a data decision threshold, and a system update step. The optical receiving module is configured to: receive, through a data lane, a rate switching identifier sent by a transmitting apparatus, where the rate switching identifier indicates that a data transmission rate is ready to be switched; and receive, through the data lane, first data sent by the transmitting apparatus based on the first rate, and perform data processing on the first data based on the parameter corresponding to the first rate.

In some possible implementations, the optical receiving module is specifically configured to: perform phase recovery on the first data based on the data decision threshold corresponding to the first rate; and/or perform polarization demultiplexing on the first data based on the system update step corresponding to the first rate; and/or perform symbol demapping on the first data based on the modulation format corresponding to the first rate.

In some possible implementations, the receiver controller is specifically configured to: monitor a quality parameter of the data lane; and if a quality parameter change of the data lane is greater than a preset value, determine an identifier of the first rate, and determine, from a lookup table, the parameter corresponding to the identifier of the first rate, where the lookup table includes a correspondence between an identifier of a rate and a parameter. The receiver controller is further configured to send the identifier of the first rate to the transmitting apparatus through a control lane.

In some possible implementations, after the receiver controller sends the identifier of the first rate to the transmitting apparatus through the control lane, and before the optical receiving module receives, through the data lane, the rate switching identifier sent by the transmitting apparatus, the receiver controller is further configured to receive, through the control lane, the identifier of the first rate that is sent by the transmitting apparatus.

In some possible implementations, after the receiver controller receives, through the control lane, the identifier of the first rate that is sent by the transmitting apparatus, and before the optical receiving module receives, through the data lane, the rate switching identifier sent by the transmitting apparatus, the receiver controller is further configured to send a first response message to the transmitting apparatus through the control lane, where the first response message indicates the transmitting apparatus to send the rate switching identifier.

In some possible implementations, after the receiver controller sends the identifier of the first rate to the transmitting apparatus through the control lane, and before the optical receiving module receives, through the data lane, the rate switching identifier sent by the transmitting apparatus, the receiver controller is further configured to send a first response message to the transmitting apparatus through the control lane, where the first response message indicates the transmitting apparatus to send the rate switching identifier.

In some possible implementations, the receiver controller is specifically configured to send the identifier of the first rate to a transit apparatus through the control lane, where the identifier of the first rate is forwarded by the transit apparatus to the transmitting apparatus.

In some possible implementations, the receiver controller is specifically configured to: receive, through a control lane, an identifier of the first rate that is sent by the transmitting apparatus based on a client requirement; and determine, from a lookup table, the parameter corresponding to the identifier of the first rate, where the lookup table includes a correspondence between an identifier of a rate and a parameter.

In some possible implementations, after the receiver controller receives, through the control lane, the identifier of the first rate that is sent by the transmitting apparatus based on the client requirement, and before the optical receiving module receives, through the data lane, the rate switching identifier sent by the transmitting apparatus, the receiver controller is further configured to send the identifier of the first rate to the transmitting apparatus through the control lane.

In some possible implementations, after the receiver controller sends the identifier of the first rate to the transmitting apparatus through the control lane, and before the optical receiving module receives, through the data lane, the rate switching identifier sent by the transmitting apparatus, the receiver controller is further configured to receive, through the control lane, a second response message sent by the transmitting apparatus, where the second response message indicates that the transmitting apparatus is ready to send the rate switching identifier.

In some possible implementations, after the receiver controller receives, through the control lane, the identifier of the first rate that is sent by the transmitting apparatus based on the client requirement, and before the optical receiving module receives, through the data lane, the rate switching identifier sent by the transmitting apparatus, the receiver controller is further configured to receive, through the control lane, a second response message sent by the transmitting apparatus, where the second response message indicates that the transmitting apparatus is ready to send the rate switching identifier.

In some possible implementations, the receiver controller is specifically configured to receive, through the control lane, the identifier of the first rate that is sent by the transmitting apparatus based on the client requirement and forwarded by a transit apparatus.

In some possible implementations, before the receiver controller obtains the parameter corresponding to the first rate, the optical receiving module is further configured to receive, through the data lane, second data sent by the transmitting apparatus based on a second rate.

According to a fifth aspect, an embodiment of this application provides a transmitting apparatus, and the transmitting apparatus includes a processor and an interface circuit. The interface circuit is configured to connect a data lane and a control lane. The processor is configured to perform the method described in any implementation of the first aspect.

According to a sixth aspect, an embodiment of this application provides a receiving apparatus, and the receiving apparatus includes a processor and an interface circuit. The interface circuit is configured to connect a data lane and a control lane. The processor is configured to perform the method described in any implementation of the second aspect.

According to a seventh aspect, an embodiment of this application provides a communication system, and the communication system includes the transmitting apparatus described in any implementation of the third aspect or the fifth aspect and the receiving apparatus described in any implementation of the fourth aspect or the sixth aspect.

According to an eighth aspect, an embodiment of this application provides an optical module, and the transmitting apparatus includes a processor and an interface circuit. The interface circuit is configured to connect a data lane and a control lane. The processor is configured to perform the method described in any implementation of the first aspect.

According to a ninth aspect, an embodiment of this application provides an optical module, and the receiving apparatus includes a processor and an interface circuit. The interface circuit is configured to connect a data lane and a control lane. The processor is configured to perform the method described in any implementation of the second aspect.

According to a tenth aspect, an embodiment of this application provides a chip, where the chip includes a processor, and the processor is configured to perform the method described in any implementation of the first aspect and the second aspect.

According to an eleventh aspect, an embodiment of this application provides a computer-readable storage medium, where the computer-readable storage medium stores a computer program, and when the computer program is executed by a computer, the method described in any implementation of the first aspect and the second aspect is implemented.

### BRIEF DESCRIPTION OF DRAWINGS

FIG. 1 is a diagram of a communication system to which an embodiment of this application is applied;
FIG. 2 is a diagram of another communication system to which an embodiment of this application is applied;
FIG. 3 is a schematic flowchart of a rate switching method applied to optical communication according to an embodiment of this application;
FIG. 4 is a diagram of a first implementation of a handshake operation between a transmitting apparatus and a receiving apparatus according to an embodiment of this application;
FIG. 5 is a diagram of a second implementation of a handshake operation between a transmitting apparatus and a receiving apparatus according to an embodiment of this application;
FIG. 6 is a diagram of a third implementation of a handshake operation between a transmitting apparatus and a receiving apparatus according to an embodiment of this application;
FIG. 7 is a diagram of a fourth implementation of a handshake operation between a transmitting apparatus and a receiving apparatus according to an embodiment of this application;
FIG. 8 is a diagram of a structure of a transmitting apparatus according to an embodiment of this application;
FIG. 9 is a diagram of a structure of a receiving apparatus according to an embodiment of this application;
FIG. 10 is a diagram of another structure of a transmitting apparatus according to an embodiment of this application; and
FIG. 11 is a diagram of another structure of a receiving apparatus according to an embodiment of this application.

### DESCRIPTION OF EMBODIMENTS

Embodiments of this application provide a rate switching method applied to optical communication and a related apparatus, so that both a transmitter and a receiver can complete rate switching to adapt to an actual scenario requirement. This helps implement high-performance and low-power transmission. In addition, a rate switching identifier is sent together with data through a data lane, so that preparation for rate switching can be implemented more quickly. This helps reduce a rate switching delay and does not affect normal transmission of a service.

It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly listed steps or units, but may include other steps or units not expressly listed or inherent to the process, the method, the product, or the device.

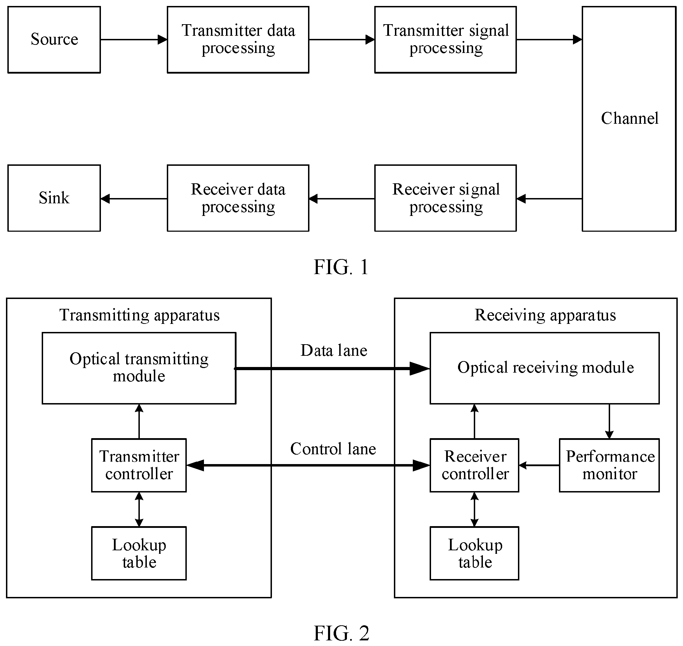

FIG. 1 is a diagram of a communication system to which an embodiment of this application is applied. As shown in FIG. 1, at a transmitter, a source provides a to-be-sent data stream; a transmitter data processor receives the data stream, performs data processing including encoding, interleaving, modulation, and DSP framing on the data stream to obtain a symbol data stream, and sends the symbol data stream to a transmitter signal processor for transmitter signal preprocessing; and a preprocessed symbol data stream reaches a receiving device through channel transmission. After receiving a signal with distortion resulting from noise or other impairment on a channel, the receiving device sends the signal to a receiver signal processor for clock synchronization, dispersion compensation, frame synchronization, polarization demultiplexing, phase recovery, and the like, then sends a processed signal to a receiver data processor for processing including demodulation, de-interleaving, and decoding, to restore original data, and sends the original data to a sink.

FIG. 2 is a diagram of another communication system to which an embodiment of this application is applied. As shown in FIG. 2, a transmitting apparatus includes an optical transmitting module, a transmitter controller, and a lookup table (lookup table, LUT), and a receiving apparatus includes an optical receiving module, a receiver controller, a performance monitor, and a lookup table. The optical transmitting module and the optical receiving module are connected through a data lane, and are configured for data transmission. The transmitter controller and the receiver controller are connected through a control lane, and are configured to implement a handshake operation for rate switching. A transmission medium of the data lane is usually an optical fiber. A transmission medium of the control lane is not limited in this application. For example, the control lane may be used for optical signal transmission or electrical signal transmission. It should be understood that the optical transmitting module is configured to perform operations of the source, the transmitter data processing, and the transmitter signal processing shown in FIG. 1, and the optical receiving module is configured to perform operations of the receiver signal processing, the receiver data processing, and the sink shown in FIG. 1.

In a possible scenario, if quality of a received signal deteriorates because a channel is degraded due to bending, twisting, or the like of an optical fiber in a communication process, and the performance monitor of the receiving apparatus detects that transmission quality of the data lane changes greatly, the receiver controller and the transmitter controller complete the handshake operation for rate switching through the control lane, and determine, based on the lookup table, a parameter corresponding to a new rate mode; and the optical transmitting module sends a rate switching identifier to the optical receiving module through the data lane, and transmits data based on the new rate mode. In another possible scenario, because a client requirement changes, the transmitter controller and the receiver controller complete the handshake operation for rate switching through the control lane, and determine, based on the lookup table, a parameter corresponding to a new rate mode; and the optical transmitting module sends a rate switching identifier to the optical receiving module through the data lane, and transmits data based on the new rate mode. It should be noted that, in addition to the two scenarios described above, rate switching may be triggered in another scenario in actual application. This is not specifically limited herein. It should be understood that a specific representation form of the rate mode is not limited in this application. For example, the rate mode may be an optical transmission scenario with a rate of 400G, a rate of 800G, a rate of 1.6T, or the like. For another example, the rate mode may alternatively be a more specific transmission rate value. The following describes in detail a rate switching method applied to optical communication according to an embodiment of this application.

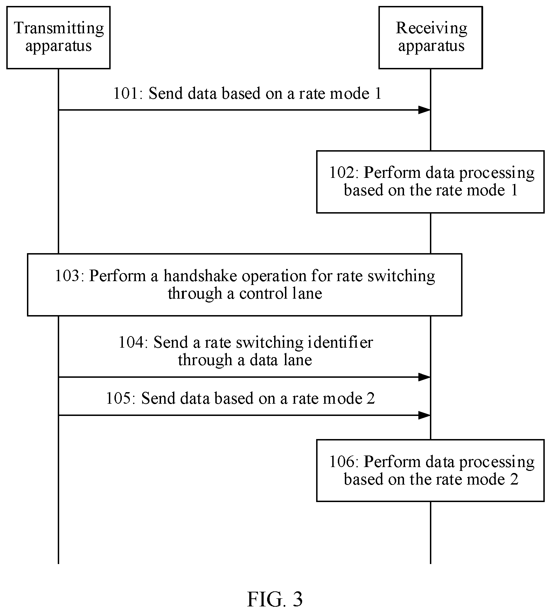

FIG. 3 is a schematic flowchart of a rate switching method applied to optical communication according to an embodiment of this application. As shown in FIG. 3, the method includes the following steps. It should be understood that a transmitting apparatus and a receiving apparatus in the following are named based on a data stream direction, and functions of the apparatuses are not limited. The transmitting apparatus may also have a receiving function, and the receiving apparatus may also have a sending function.

101: The transmitting apparatus sends data to the receiving apparatus based on a rate mode 1.

In a scenario in which transmission quality of a data lane remains unchanged and a client requirement remains unchanged, the transmitting apparatus first configures a corresponding transmitter processing parameter based on the current rate mode 1, processes to-be-sent data based on the transmitter processing parameter corresponding to the rate mode 1, and then sends the data to the receiving apparatus through the data lane.

102: The receiving apparatus performs data processing based on the rate mode 1.

After receiving the data sent by the transmitting apparatus based on the rate mode 1, the receiving apparatus processes the received data based on a receiver processing parameter corresponding to the rate mode 1.

103: The transmitting apparatus and the receiving apparatus perform a handshake operation for rate switching through a control lane.

In a scenario in which the transmission quality of the data lane changes greatly or the client requirement changes, the transmitting apparatus and the receiving apparatus need to perform rate switching, and perform data transmission based on a new rate mode 2. Correspondingly, the transmitting apparatus and the receiving apparatus perform the handshake operation for rate switching through the control lane, so that the transmitting apparatus and the receiving apparatus negotiate the rate mode 2 to be switched to. Further, the transmitting apparatus and the receiving apparatus each may determine a corresponding processing parameter based on the rate mode 2, to be ready for rate switching at any time.

104: The transmitting apparatus sends a rate switching identifier to the receiving apparatus through the data lane.

It should be understood that the rate switching identifier indicates that a data transmission rate is ready to be switched, so that the receiving apparatus is ready to perform data processing on subsequently received data by using a receiver processing parameter corresponding to the rate mode 2. It should be noted that the transmitting apparatus may send the rate switching identifier and data together to the receiving apparatus through the data lane, so that preparation for rate switching can be implemented more quickly. This helps reduce a rate switching delay and does not affect normal transmission of a service. A specific manner of including the rate switching identifier in the data is not limited in this application.

105: The transmitting apparatus sends data to the receiving apparatus based on the rate mode 2.

A structure of the communication system shown in FIG. 2 is used as an example. The transmitter controller and the receiver controller negotiate, through the handshake operation described in step 103, the rate mode 2 to be switched to. For example, the transmitter controller and the receiver controller may negotiate an identifier of the rate mode 2 through the handshake operation, and the transmitter controller determines, from the lookup table, a transmitter processing parameter corresponding to the identifier of the rate mode 2. The lookup table may be understood as a correspondence, stored in a transmitter storage unit, between an identifier of a rate mode and a transmitter processing parameter. It should be understood that the transmitter processing parameter includes but is not limited to at least one of a modulation format, a probabilistic constellation shaping (probabilistic constellation shaping, PCS) parameter, and a transmission baud rate. Further, the transmitter controller configures, for the optical transmitting module, the transmitter processing parameter corresponding to the rate mode 2, and the optical transmitting module processes to-be-sent data based on the transmitter processing parameter corresponding to the rate mode 2, and sends data to the receiving apparatus through the data lane.

In an example, the optical transmitting module performs symbol mapping on the to-be-sent data based on a modulation format corresponding to the rate mode 2. The modulation format includes but is not limited to quadrature phase shift keying (Quadrature Phase Shift Keying, QPSK) and quadrature amplitude modulation (Quadrature Amplitude Modulation, QAM), and may be specifically 8QAM, 16QAM, 32QAM, 64QAM, or the like. It should be understood that, to adapt to the modulation format corresponding to the rate mode 2, a root mean square value (root mean square value, RMS) gain modulation parameter further needs to be correspondingly adjusted, to ensure stability of output power. In another example, the optical transmitting module performs PCS processing on the to-be-sent data based on a PCS parameter corresponding to the rate mode 2. During PCS processing, k input bits are mapped to output corresponding n bits. A quantity n of output bits during PCS processing cannot be excessively small. If the quantity n of output bits during PCS processing is excessively small, overall PCS processing causes a performance loss. The quantity n of output bits during PCS processing cannot be excessively large. If the quantity n of output bits during PCS processing is excessively large, it is not conducive to hardware implementation. In still another example, the optical transmitting module performs processing based on the rate mode 2 to implement adjustment for a transmission baud rate matching the rate mode 2.

106: The receiving apparatus performs data processing based on the rate mode 2.

The structure of the communication system shown in FIG. 2 is used as an example. The transmitter controller and the receiver controller negotiate, through the handshake operation described in step 103, the rate mode 2 to be switched to. For example, the transmitter controller and the receiver controller may negotiate the identifier of the rate mode 2 through the handshake operation, and the receiver controller determines, from the lookup table, a receiver processing parameter corresponding to the identifier of the rate mode 2. The lookup table may be understood as a correspondence, stored in a receiver storage unit, between an identifier of a rate mode and a receiver processing parameter. It should be understood that the receiver processing parameter includes but is not limited to at least one of a modulation format, a data decision threshold, and a system update step. Further, the receiver controller configures, for the optical receiving module, the receiver processing parameter corresponding to the rate mode 2, and the optical receiving module processes the received data based on the receiver processing parameter corresponding to the rate mode 2.

In an example, the optical receiving module performs phase recovery on the received data based on a data decision threshold corresponding to the rate mode 2, to avoid transmission quality deterioration caused by rate switching. In another example, the optical receiving module performs polarization demultiplexing, or referred to as equalization processing, on the received data based on a system update step corresponding to the rate mode 2, to ensure data convergence. In still another example, the optical receiving module demaps the received data based on a modulation format corresponding to the rate mode 2. The modulation format may be specifically QPSK, 8QAM, 16QAM, 32QAM, 64QAM, or the like.

It can be learned from the foregoing descriptions that, if channel quality changes greatly or a client requirement changes, the transmitting apparatus and the receiving apparatus may obtain a configuration parameter corresponding to a new rate mode. Before sending data based on the configuration parameter corresponding to the new rate mode, the transmitting apparatus first sends, to the receiving apparatus through the data lane, the rate switching identifier indicating rate switching, so that the receiving apparatus performs data processing based on the new rate mode, and both the transmitter and the receiver can complete rate switching to adapt to an actual scenario requirement. This helps implement high-performance and low-power transmission. In addition, the rate switching identifier is sent together with the data through the data lane, so that preparation for rate switching can be implemented more quickly. This helps reduce a rate switching delay and does not affect normal transmission of a service.

The following describes in detail a plurality of implementations of the handshake operation between the transmitting apparatus and the receiving apparatus in step 103. It should be understood that, in the structure of the communication system shown in FIG. 2, the transmitter controller of the transmitting apparatus interacts with the receiver controller of the receiving apparatus through the control lane, to implement the handshake operation.

In a first possible scenario, the receiving apparatus determines, by monitoring a quality parameter of the data lane, whether to start rate switching. If rate switching needs to be performed, the receiving apparatus actively performs the handshake operation for rate switching with the transmitting apparatus.

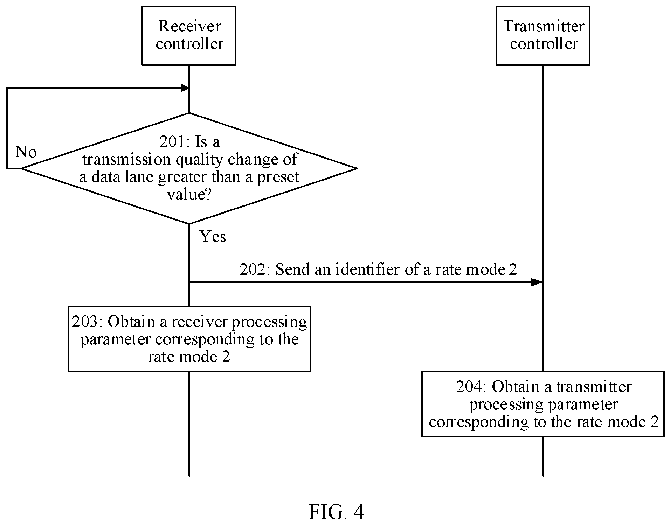

FIG. 4 is a diagram of a first implementation of a handshake operation between a transmitting apparatus and a receiving apparatus according to an embodiment of this application. The structure of the communication system shown in FIG. 2 is used as an example. The performance monitor of the receiving apparatus monitors a quality parameter of the data lane, and sends a monitoring result to the receiver controller. The quality parameter of the data lane includes but is not limited to a signal-to-noise ratio (signal-to-noise ratio, SNR), a bit error ratio (bit error ratio, BER), and a Q value. It should be understood that the Q value may also be referred to as a quality factor, and represents a ratio of a decision level signal to noise. As shown in FIG. 4, the handshake operation between the transmitter controller and the receiver controller includes the following procedure.

201: The receiver controller determines whether a quality parameter change of the data lane is greater than a preset value. If the quality parameter change of the data lane is greater than the preset value, step 202 is performed.

It should be understood that, if the receiver controller determines that the quality parameter of the data lane changes greatly, it indicates that a data transmission rate needs to be changed to adapt to a scenario change. For example, if channel quality becomes better, an SNR value increases, a BER value decreases, and the Q value increases. In this case, a throughput may be increased by switching to a high rate. If channel quality deteriorates, an SNR value decreases, a BER value increases, and the Q value decreases. In this case, a throughput may be decreased by switching to a low rate.

202: The receiver controller sends an identifier of a rate mode 2 to the transmitter controller through the control lane.

If the quality parameter change of the data lane is greater than the preset value, the receiver controller may determine, based on an actual quality parameter change of the data lane, the rate mode 2 to be switched to, and send the identifier of the rate mode 2 to the transmitter controller through the control lane, to negotiate with the transmitter controller to switch to the rate mode 2. In some possible scenarios, the receiver controller may send the identifier of the rate mode 2 in a form of an optical signal to the transmitter controller through an optical fiber, and ensure, as much as possible through forward error correction (forward error correction, FEC) and the like, that the transmitter controller can receive a correct identifier of the rate mode 2.

203: The receiver controller obtains a receiver processing parameter corresponding to the rate mode 2.

Specifically, the receiver controller determines, from the lookup table, the receiver processing parameter corresponding to the identifier of the rate mode 2. It should be understood that there is no fixed time sequence relationship between step 203 and step 202. For example, step 202 may be performed before step 203, or step 203 may be performed before step 202, or step 202 and step 203 may be performed at the same time. It should be further understood that, usually, the receiver controller configures, for the optical receiving module, the receiver processing parameter corresponding to the rate mode 2 after the optical receiving module receives a rate switching identifier sent by the optical transmitting module, so that the optical receiving module is ready to process received data transmitted based on the rate mode 2.

204: The transmitter controller obtains a transmitter processing parameter corresponding to the rate mode 2.

Specifically, after receiving the identifier of the rate mode 2, the transmitter controller determines, from the lookup table, the transmitter processing parameter corresponding to the identifier of the rate mode 2. Usually, the transmitter controller configures, for the optical transmitting module, the transmitter processing parameter corresponding to the rate mode 2 after the optical transmitting module sends the rate switching identifier to the optical receiving module, so that the optical transmitting module is ready to process to-be-sent data based on the rate mode 2.

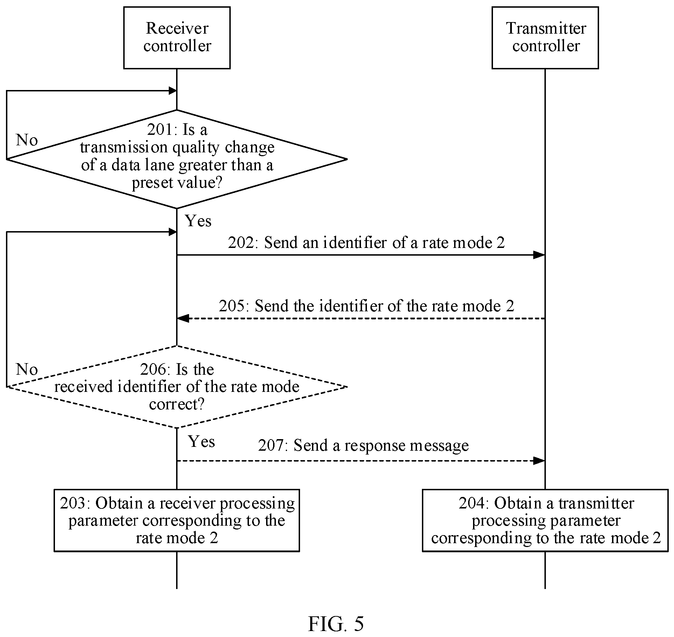

FIG. 5 is a diagram of a second implementation of a handshake operation between a transmitting apparatus and a receiving apparatus according to an embodiment of this application. Based on the implementation shown in FIG. 4, as shown in FIG. 5, the handshake operation between the transmitter controller and the receiver controller may further include the following optional procedure.

205: The transmitter controller sends the identifier of the rate mode 2 to the receiver controller through the control lane.

In a possible scenario, the receiver controller sends the identifier of the rate mode 2 in a form of an electrical signal to the transmitter controller. In comparison with optical signal transmission, there is a higher probability that an error occurs during electrical signal transmission. Therefore, after receiving the identifier of the rate mode 2 that is sent by the receiver controller, the transmitter controller may further send the identifier of the rate mode 2 back to the receiver controller, to feed back whether a correct identifier of the rate mode 2 is received. This helps improve handshake operation reliability. In another possible scenario, the receiver controller may alternatively send the identifier of the rate mode 2 in a form of an optical signal to the transmitter controller. In comparison with electrical signal transmission, there is a lower probability that an error occurs during optical signal transmission. Therefore, after receiving the identifier of the rate mode 2 that is sent by the receiver controller, the transmitter controller may alternatively not send the identifier of the rate mode 2 to the receiver controller, but send a feedback message to notify the receiver controller that the transmitter controller receives the identifier of the rate mode 2.

206: The receiver controller determines whether the received identifier of the rate mode is correct. If the received identifier of the rate mode is correct, step 207 is performed.

Optionally, in some possible scenarios, if the receiver controller determines that the received identifier of the rate mode is correct, it indicates that the handshake operation is completed, and step 207 may alternatively not be performed. In this scenario, after the transmitter controller sends the identifier of the rate mode 2 to the receiver controller, the optical transmitting module preferably waits for a period of time before sending the rate switching identifier to the optical receiving module, to reserve sufficient time for the receiver controller to process information.

207: The receiver controller sends a response message to the transmitter controller through the control lane.

If the identifier of the rate mode 2 fed back by the transmitter controller to the receiver controller is correct, the receiver controller sends the response message to the transmitter controller, to indicate that the receiver controller is ready to detect the rate switching identifier and receive data transmitted based on the rate mode 2. In other words, the receiver controller sends the response message to the transmitter controller to notify the transmitter controller that the handshake operation for rate switching is completed, and the transmitter controller may start to send the rate switching identifier and send the data based on the rate mode 2. Optionally, in some possible scenarios, step 205 and step 206 may alternatively not be performed, and step 207 may be directly performed. It should be understood that there is no fixed time sequence relationship between step 203 and step 205 to step 207.

In a second possible scenario, the transmitting apparatus may determine, depending on whether a client requirement changes, whether to start rate switching. If rate switching needs to be performed, the transmitting apparatus actively performs the handshake operation for rate switching with the receiving apparatus.

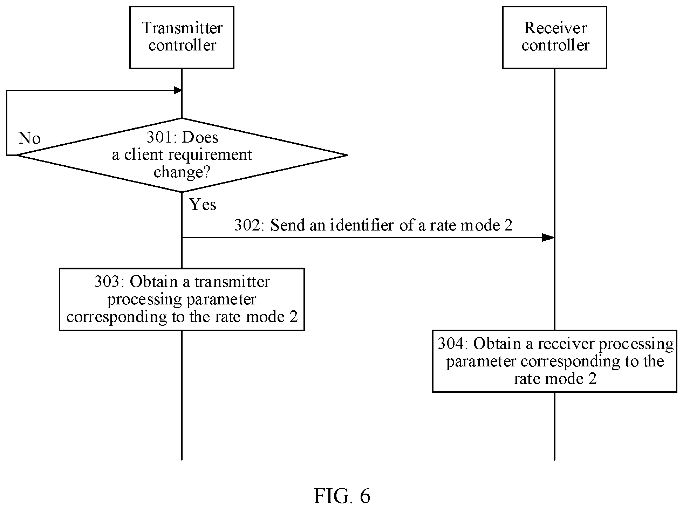

FIG. 6 is a diagram of a third implementation of a handshake operation between a transmitting apparatus and a receiving apparatus according to an embodiment of this application. The structure of the communication system shown in FIG. 2 is used as an example. The transmitter controller may obtain a client requirement in real time and determine whether the client requirement changes. As shown in FIG. 6, the handshake operation between the transmitter controller and the receiver controller includes the following procedure.

301: The transmitter controller determines whether the client requirement changes. If the client requirement changes, step 302 is performed.

It should be understood that client requirements may vary with different prices and peak usage over a day. For example, if a capacity required by a client is reduced, transmit bandwidth may be reduced.

302: The transmitter controller sends an identifier of a rate mode 2 to the receiver controller through the control lane.

If the client requirement changes, the transmitter controller may determine, based on a new client requirement, the rate mode 2 to be switched to, and send the identifier of the rate mode 2 to the receiver controller through the control lane, to negotiate with the receiver controller to switch to the rate mode 2. It should be understood that, after the transmitter controller sends the identifier of the rate mode 2 to the receiver controller, the optical transmitting module preferably waits for a period of time before sending a rate switching identifier to the optical receiving module, to reserve sufficient time for the receiver controller to process information. In some possible scenarios, the transmitter controller may send the identifier of the rate mode 2 in a form of an optical signal to the receiver controller through an optical fiber, and ensure, as much as possible through FEC and the like, that the receiver controller can receive a correct identifier of the rate mode 2.

303: The transmitter controller obtains a transmitter processing parameter corresponding to the rate mode 2.

Specifically, the transmitter controller determines, from the lookup table, the transmitter processing parameter corresponding to the identifier of the rate mode 2. It should be understood that there is no fixed time sequence relationship between step 303 and step 302. For example, step 302 may be performed before step 303, or step 303 may be performed before step 302, or step 302 and step 303 may be performed at the same time. Usually, the transmitter controller configures, for the optical transmitting module, the transmitter processing parameter corresponding to the rate mode 2 after the optical transmitting module sends the rate switching identifier to the optical receiving module, so that the optical transmitting module is ready to process to-be-sent data based on the rate mode 2.

304: The receiver controller obtains a receiver processing parameter corresponding to the rate mode 2.

Specifically, after receiving the identifier of the rate mode 2, the receiver controller determines, from the lookup table, the receiver processing parameter corresponding to the identifier of the rate mode 2. Usually, the receiver controller configures, for the optical receiving module, the receiver processing parameter corresponding to the rate mode 2 after the optical receiving module receives the rate switching identifier sent by the optical transmitting module, so that the optical receiving module is ready to process received data transmitted based on the rate mode 2.

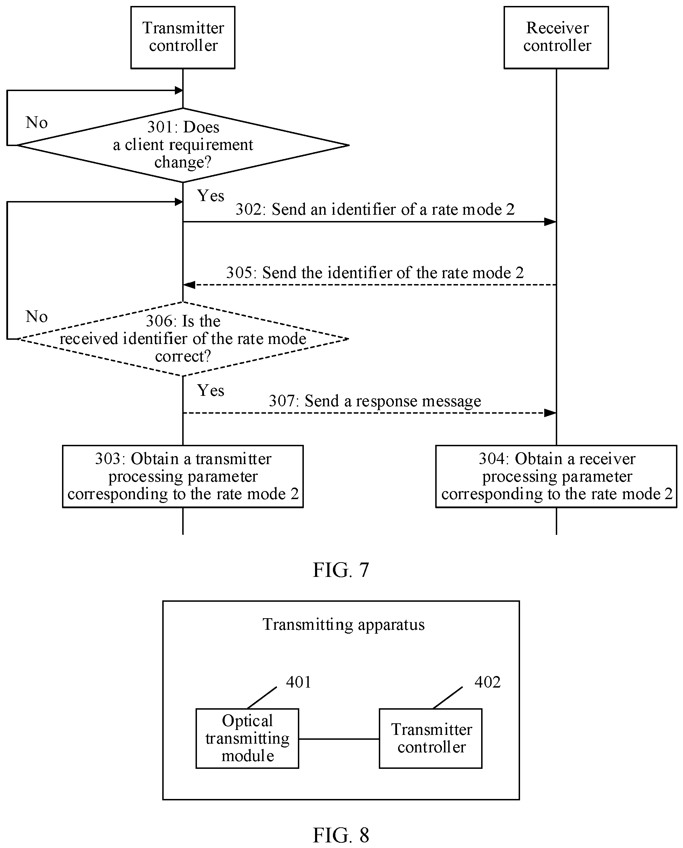

FIG. 7 is a diagram of a fourth implementation of a handshake operation between a transmitting apparatus and a receiving apparatus according to an embodiment of this application. Based on the implementation shown in FIG. 6, as shown in FIG. 7, the handshake operation between the transmitter controller and the receiver controller may further include the following optional procedure.

305: The receiver controller sends the identifier of the rate mode 2 to the transmitter controller through the control lane.

In a possible scenario, the transmitter controller sends the identifier of the rate mode 2 in a form of an electrical signal to the receiver controller. In comparison with optical signal transmission, there is a higher probability that an error occurs during electrical signal transmission. Therefore, after receiving the identifier of the rate mode 2 that is sent by the transmitter controller, the receiver controller may further send the identifier of the rate mode 2 back to the transmitter controller, to feed back whether a correct identifier of the rate mode 2 is received. This helps improve handshake operation reliability. In another possible scenario, the transmitter controller may alternatively send the identifier of the rate mode 2 in a form of an optical signal to the receiver controller. In comparison with electrical signal transmission, there is a lower probability that an error occurs during optical signal transmission. Therefore, after receiving the identifier of the rate mode 2 that is sent by the transmitter controller, the receiver controller may alternatively not send the identifier of the rate mode 2 to the transmitter controller, but send a feedback message to notify the transmitter controller that the receiver controller receives the identifier of the rate mode 2.

306: The transmitter controller determines whether the received identifier of the rate mode is correct. If the received identifier of the rate mode is correct, step 307 is performed.

Optionally, in some possible scenarios, if the transmitter controller determines that the received identifier of the rate mode is correct, it indicates that the handshake operation is completed, and step 307 may alternatively not be performed.

307: The transmitter controller sends a response message to the receiver controller through the control lane.

If the identifier of the rate mode 2 fed back by the receiver controller to the transmitter controller is correct, the transmitter controller sends the response message to the receiver controller, to indicate that the transmitter controller is ready to send the rate switching identifier and send data based on the rate mode 2. In other words, the transmitter controller sends the response message to the receiver controller to notify the receiver controller that the handshake operation for rate switching is completed, and the transmitter controller is ready to send the rate switching identifier and send the data based on the rate mode 2. It should be understood that, after the transmitter controller sends the response message to the receiver controller, the optical transmitting module preferably waits for a period of time before sending the rate switching identifier to the optical receiving module, to reserve sufficient time for the receiver controller to process information. Optionally, in some possible scenarios, after step 307, the receiver controller may further send a response message to the transmitter controller to notify the transmitter controller that the transmitter controller may start to send the rate switching identifier. After receiving the response message returned by the receiver controller, the transmitter controller may immediately send the rate switching identifier. Optionally, in some possible scenarios, step 305 and step 306 may alternatively not be performed, and step 307 may be directly performed. It should be understood that there is no fixed time sequence relationship between step 303 and step 305 to step 307.

It should be noted that, based on the handshake operation described in any one of the foregoing implementations in FIG. 4 to FIG. 7, in some possible scenarios, an intermediate device is further connected between the transmitter controller and the receiver controller, the intermediate device is connected to the transmitter controller and the receiver controller through the control lane, and the intermediate device is specifically configured to forward information exchanged between the transmitter controller and the receiver controller through the control lane.

FIG. 8 is a diagram of a structure of a transmitting apparatus according to an embodiment of this application. As shown in FIG. 8, the transmitting apparatus includes an optical transmitting module 401 and a transmitter controller 402. The optical transmitting module 401 is configured to perform step 101, step 104, and step 105. The transmitter controller 402 is configured to perform step 103 and operations performed by the transmitter controller in FIG. 4 to FIG. 7. It should be understood that the transmitting apparatus provided in this embodiment of this application may alternatively be implemented in another manner. For example, division into units in the foregoing transmitting apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

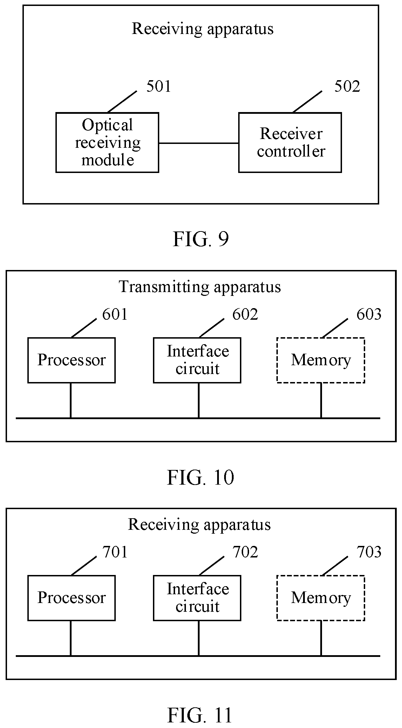

FIG. 9 is a diagram of a structure of a receiving apparatus according to an embodiment of this application. As shown in FIG. 9, the receiving apparatus includes an optical receiving module 501 and a receiver controller 502. The optical receiving module 501 is configured to perform step 102 and step 106. The receiver controller 502 is configured to perform step 103 and operations performed by the receiver controller in FIG. 4 to FIG. 7. It should be understood that the receiving apparatus provided in this embodiment of this application may alternatively be implemented in another manner. For example, division into units in the foregoing receiving apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 10 is a diagram of another structure of a transmitting apparatus according to an embodiment of this application. As shown in FIG. 10, the transmitting apparatus includes a processor 601 and an interface circuit 602. The interface circuit 602 is configured to connect a data lane and a control lane. An interface for connecting the data lane and an interface for connecting the control lane may be independent of each other, or may be integrated together. The interface circuit 602 may be a transceiver or an input/output interface. The interface circuit 602 is configured to perform data and information receiving and sending operations through the data lane and the control lane. For example, the interface circuit 602 is configured to receive a signal from an apparatus other than the transmitting apparatus and transmit the signal to the processor 601, or send a signal from the processor 601 to an apparatus other than the transmitting apparatus. The processor 601 is configured to perform an operation other than data and information receiving and sending. Optionally, the transmitting apparatus may further include a memory 603, where the memory 603 is configured to store program instructions and data.

FIG. 11 is a diagram of another structure of a receiving apparatus according to an embodiment of this application. As shown in FIG. 11, the receiving apparatus includes a processor 701 and an interface circuit 702. The interface circuit 702 is configured to connect a data lane and a control lane. An interface for connecting the data lane and an interface for connecting the control lane may be independent of each other, or may be integrated together. The interface circuit 702 may be a transceiver or an input/output interface. The interface circuit 702 is configured to perform data and information receiving and sending operations through the data lane and the control lane. For example, the interface circuit 702 is configured to receive a signal from an apparatus other than the receiving apparatus and transmit the signal to the processor 701, or send a signal from the processor 701 to an apparatus other than the receiving apparatus. The processor 701 is configured to perform an operation other than data and information receiving and sending. Optionally, the receiving apparatus may further include a memory 703, where the memory 703 is configured to store program instructions and data.

An embodiment of this application further provides a chip. A circuit and one or more interfaces that are configured to implement a function of the processor 601 or the processor 701 are integrated into the chip. In an example, a memory is integrated into the chip. In another example, when no memory is integrated into the chip, the chip may be connected to an external memory through an interface. The chip may complete the method steps in any one or more of the foregoing embodiments. Alternatively, the chip implements, based on program code stored in the memory, actions performed by the data processing apparatus in the foregoing embodiments.

An embodiment of this application further provides a computer-readable storage medium, including a program or instructions. When the program or the instructions are run on a computer, the method performed by the processor 601 or the processor 701 in the foregoing method embodiments is performed.

It should be understood that the processor mentioned in embodiments of this application may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

In an example, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The memory in embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by using software, hardware, firmware, or any combination thereof.

When the hardware is used for implementation, the method provided in embodiments of this application may not be implemented by reading software code or instructions. For example, the method may be implemented by using a CPU, a DSP, an ASIC, an FPGA, another programmable logic device, a transistor logic device, a hardware component, or any combination thereof.

When the software is used for implementation, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A rate switching method applied to optical communication, comprising:
obtaining, by a transmitting apparatus, a parameter corresponding to a first rate, wherein the parameter corresponding to the first rate comprises at least one of a modulation format, a probabilistic constellation shaping PCS parameter, and a transmission baud rate that correspond to the first rate;
sending, by the transmitting apparatus, a rate switching identifier to receiving apparatus through a data lane, wherein the rate switching identifier indicates that a data transmission rate is ready to be switched; and
sending, by the transmitting apparatus, first data to the receiving apparatus through the data lane based on the parameter corresponding to the first rate.

2. The method according to claim 1, wherein the sending, by the transmitting apparatus, the first data to the receiving apparatus through the data lane based on the parameter corresponding to the first rate comprises:
performing, by the transmitting apparatus, symbol mapping on to-be-sent data based on the modulation format corresponding to the first rate, to obtain the first data, and sending the first data;
and/or
performing, by the transmitting apparatus, PCS processing on to-be-sent data based on the PCS parameter corresponding to the first rate, to obtain the first data, and sending the first data.

3. The method according to claim 1 or 2, wherein the obtaining, by the transmitting apparatus, the parameter corresponding to the first rate comprises:
receiving, by the transmitting apparatus through a control lane, an identifier of the first rate that is sent by the receiving apparatus, wherein the identifier of the first rate is sent under a condition that the receiving apparatus detects that a quality parameter change of the data lane is greater than a preset value; and
determining, by the transmitting apparatus from a lookup table, the parameter corresponding to the identifier of the first rate, wherein the lookup table comprises a correspondence between an identifier of a rate and a parameter.

4. The method according to claim 3, wherein after the receiving, by the transmitting apparatus through the control lane, the identifier of the first rate that is sent by the receiving apparatus, and before the sending, by the transmitting apparatus, the rate switching identifier to the receiving apparatus through the data lane, the method further comprises:
sending, by the transmitting apparatus, the identifier of the first rate to the receiving apparatus through the control lane.

5. The method according to claim 4, wherein after the sending, by the transmitting apparatus, the identifier of the first rate to the receiving apparatus through the control lane, and before the sending, by the transmitting apparatus, the rate switching identifier to the receiving apparatus through the data lane, the method further comprises:
receiving, by the transmitting apparatus through the control lane, a first response message sent by the receiving apparatus, wherein the first response message indicates the transmitting apparatus to send the rate switching identifier.

6. The method according to any one of claims 3 to 5, wherein the receiving, by the transmitting apparatus through the control lane, the identifier of the first rate that is sent by the receiving apparatus comprises:
receiving, by the transmitting apparatus through the control lane, the identifier of the first rate that is sent by the receiving apparatus and forwarded by a transit apparatus.

7. The method according to claim 1 or 2, wherein the obtaining, by the transmitting apparatus, the parameter corresponding to the first rate comprises:
obtaining, by the transmitting apparatus, an identifier of the first rate that corresponds to a client requirement; and
determining, by the transmitting apparatus from a lookup table, the parameter corresponding to the identifier of the first rate, wherein the lookup table comprises a correspondence between an identifier of a rate and a parameter; and
the method further comprises:
sending, by the transmitting apparatus, the identifier of the first rate to the receiving apparatus through a control lane.

8. The method according to claim 7, wherein after the sending, by the transmitting apparatus, the identifier of the first rate to the receiving apparatus through the control lane, and before the sending, by the transmitting apparatus, the rate switching identifier to the receiving apparatus through the data lane, the method further comprises:
receiving, by the transmitting apparatus through the control lane, the identifier of the first rate that is sent by the receiving apparatus.

9. The method according to claim 8, wherein after the receiving, by the transmitting apparatus through the control lane, the identifier of the first rate that is sent by the receiving apparatus, and before the sending, by the transmitting apparatus, the rate switching identifier to the receiving apparatus through the data lane, the method further comprises:
sending, by the transmitting apparatus, a second response message to the receiving apparatus through the control lane, wherein the second response message indicates that the transmitting apparatus is ready to send the rate switching identifier.

10. The method according to any one of claims 7 to 9, wherein the sending, by the transmitting apparatus, the identifier of the first rate to the receiving apparatus through the control lane comprises:
sending, by the transmitting apparatus, the identifier of the first rate to a transit apparatus through the control lane, wherein the identifier of the first rate is forwarded by the transit apparatus to the receiving apparatus.

11. The method according to any one of claims 1 to 10, wherein before the obtaining, by the transmitting apparatus, the parameter corresponding to the first rate, the method further comprises:
sending, by the transmitting apparatus, second data to the receiving apparatus through the data lane based on a parameter corresponding to a second rate.

12. A rate switching method applied to optical communication, comprising:
obtaining, by a receiving apparatus, a parameter corresponding to a first rate, wherein the parameter corresponding to the first rate comprises at least one of a modulation format, a data decision threshold, and a system update step;
receiving, by the receiving apparatus through a data lane, a rate switching identifier sent by transmitting apparatus, wherein the rate switching identifier indicates that a data transmission rate is ready to be switched; and
receiving, by the receiving apparatus through the data lane, first data sent by the transmitting apparatus based on the first rate, and performing data processing on the first data based on the parameter corresponding to the first rate.

13. The method according to claim 12, wherein the performing, by the receiving apparatus, data processing on the first data based on the parameter corresponding to the first rate comprises:
performing, by the receiving apparatus, phase recovery on the first data based on the data decision threshold corresponding to the first rate;
and/or
performing, by the receiving apparatus, polarization demultiplexing on the first data based on the system update step corresponding to the first rate;
and/or
performing, by the receiving apparatus, symbol demapping on the first data based on the modulation format corresponding to the first rate.

14. The method according to claim 12 or 13, wherein the obtaining, by the receiving apparatus, the parameter corresponding to the first rate comprises:
monitoring, by the receiving apparatus, a quality parameter of the data lane; and
if a quality parameter change of the data lane is greater than a preset value, determining, by the receiving apparatus, an identifier of the first rate, and determining, from a lookup table, the parameter corresponding to the identifier of the first rate, wherein the lookup table comprises a correspondence between an identifier of a rate and a parameter; and
the method further comprises:
sending, by the receiving apparatus, the identifier of the first rate to the transmitting apparatus through a control lane.

15. The method according to claim 14, wherein after the sending, by the receiving apparatus, the identifier of the first rate to the transmitting apparatus through the control lane, and before the receiving, by the receiving apparatus through the data lane, the rate switching identifier sent by the transmitting apparatus, the method further comprises:
receiving, by the receiving apparatus through the control lane, the identifier of the first rate that is sent by the transmitting apparatus.

16. The method according to claim 15, wherein after the receiving, by the receiving apparatus through the control lane, the identifier of the first rate that is sent by the transmitting apparatus, and before the receiving, by the receiving apparatus through the data lane, the rate switching identifier sent by the transmitting apparatus, the method further comprises:
sending, by the receiving apparatus, a first response message to the transmitting apparatus through the control lane, wherein the first response message indicates the transmitting apparatus to send the rate switching identifier.

17. The method according to any one of claims 14 to 16, wherein the sending, by the receiving apparatus, the identifier of the first rate to the transmitting apparatus through the control lane comprises:
sending, by the receiving apparatus, the identifier of the first rate to a transit apparatus through the control lane, wherein the identifier of the first rate is forwarded by the transit apparatus to the transmitting apparatus.

18. The method according to claim 12 or 13, wherein the obtaining, by the receiving apparatus, the parameter corresponding to the first rate comprises:
receiving, by the receiving apparatus through a control lane, an identifier of the first rate that is sent by the transmitting apparatus based on a client requirement; and
determining, by the receiving apparatus from a lookup table, the parameter corresponding to the identifier of the first rate, wherein the lookup table comprises a correspondence between an identifier of a rate and a parameter.

19. The method according to claim 18, wherein after the receiving, by the receiving apparatus through the control lane, the identifier of the first rate that is sent by the transmitting apparatus based on the client requirement, and before the receiving, by the receiving apparatus through the data lane, the rate switching identifier sent by the transmitting apparatus, the method further comprises:
sending, by the receiving apparatus, the identifier of the first rate to the transmitting apparatus through the control lane.

20. The method according to claim 19, wherein after the sending, by the receiving apparatus, the identifier of the first rate to the transmitting apparatus through the control lane, and before the receiving, by the receiving apparatus through the data lane, the rate switching identifier sent by the transmitting apparatus, the method further comprises:
receiving, by the receiving apparatus through the control lane, a second response message sent by the transmitting apparatus, wherein the second response message indicates that the transmitting apparatus is ready to send the rate switching identifier.

21. The method according to any one of claims 18 to 20, wherein the receiving, by the receiving apparatus through the control lane, the identifier of the first rate that is sent by the transmitting apparatus based on the client requirement comprises:
receiving, by the receiving apparatus through the control lane, the identifier of the first rate that is sent by the transmitting apparatus based on the client requirement and forwarded by a transit apparatus.

22. The method according to any one of claims 12 to 21, wherein before the obtaining, by the receiving apparatus, the parameter corresponding to the first rate, the method further comprises:
receiving, by the receiving apparatus through the data lane, second data sent by the transmitting apparatus based on a parameter corresponding to a second rate.

23. A transmitting apparatus, wherein the transmitting apparatus comprises an optical transmitting module and a transmitter controller, wherein
the transmitter controller is configured to obtain a parameter corresponding to a first rate, wherein the parameter corresponding to the first rate comprises at least one of a modulation format, a probabilistic constellation shaping PCS parameter, and a transmission baud rate that correspond to the first rate; and
the optical transmitting module is configured to: send a rate switching identifier to receiving apparatus through a data lane, wherein the rate switching identifier indicates that a data transmission rate is ready to be switched; and
send first data to the receiving apparatus through the data lane based on the parameter corresponding to the first rate.

24. A receiving apparatus, wherein the receiving apparatus comprises an optical receiving module and a receiver controller, wherein
the receiver controller is configured to obtain a parameter corresponding to a first rate, wherein the parameter corresponding to the first rate comprises at least one of a modulation format, a data decision threshold, and a system update step; and
the optical receiving module is configured to: receive, through a data lane, a rate switching identifier sent by transmitting apparatus, wherein the rate switching identifier indicates that a data transmission rate is ready to be switched; and
receive, through the data lane, first data sent by the transmitting apparatus based on the first rate, and perform data processing on the first data based on the parameter corresponding to the first rate.

25. A transmitting apparatus, wherein the transmitting apparatus comprises a processor and an interface circuit, the interface circuit is configured to connect a data lane and a control lane, and the processor is configured to perform the method according to any one of claims 1 to 11.

26. A receiving apparatus, wherein the receiving apparatus comprises a processor and an interface circuit, the interface circuit is configured to connect a data lane and a control lane, and the processor is configured to perform the method according to any one of claims 12 to 22.

27. A communication system, wherein the communication system comprises the transmitting apparatus according to claim 23 or 25 and the receiving apparatus according to claim 24 or 26.

28. A chip, wherein the chip comprises a processor, and the processor is configured to perform the method according to any one of claims 1 to 22.
